# EUROPÄISCHE PATENTSCHRIFT

(11) **EP 2 842 813 B1**
(45) Veröffentlichungstag und Bekanntmachung des Hinweises auf die Patenterteilung: **10.05.2017**
(21) Anmeldenummer: 14172355.1
(22) Anmeldetag: 13.06.2014
(51) Int. Cl.: B60R 16/03, B60R 25/045, A01B 79/00

(54) **LANDWIRTSCHAFTLICHES FAHRZEUG**
AGRICULTURAL VEHICLE
VÉHICULE AGRICOLE

(30) Priorität: 30.08.2013 DE 102013109425
(43) Veröffentlichungstag der Anmeldung: 04.03.2015
(73) Patentinhaber: CLAAS Tractor SAS, 78141 Velizy-Villacoublay (FR)
(72) Erfinder: Guillaume, Patrick, 92370 Chaville (FR)
(74) Vertreter: Budach, Steffen

(56) Entgegenhaltungen:
- EP-A1- 1 495 915
- EP-A1- 2 548 430
- EP-A1- 2 623 378
- WO-A1-2009/099383
- WO-A1-2013/006915
- WO-A1-2013/054707
- DE-A1-102004 002 949
- JP-A- 2007 168 533
- JP-A- 2007 267 630
- US-A- 5 694 335
- US-A1- 2002 096 572
- US-A1- 2005 248 444

## Beschreibung

Die Erfindung betrifft ein landwirtschaftliches Fahrzeug gemäß dem Oberbegriff des Anspruchs 1.

Landwirtschaftliche Fahrzeuge wie beispielsweise Traktoren, Mähdrescher, Feldhäcksler oder dergleichen sind üblicherweise mit einer Vielzahl elektrischer Verbraucher ausgestattet. Während es sich dabei herkömmlich im Wesentlichen um Aggregate wie Anlasser, Kühler, Zündung handelt, die in engem Funktionszusammenhang mit dem Betrieb eines fahrzeugeigenen Verbrennungsmotors stehen, kommen in zunehmendem Maße zahlreiche weitere elektrische und/oder elektronische Aggregate als elektrische Verbraucher zur Anwendung, die zusätzliche Funktionen am Fahrzeug bereitstellen (z.B.: Steuer- und Regelungsfunktionen, Navigation, Datenverarbeitung, Auftragsmanagement, Klimatisierung der Kabine, Beleuchtung, Unterhaltung usw.) und damit auf vielfältige Weise zum Nutzen des Fahrzeugs für einen Bediener beitragen.

Zunächst unabhängig von der Art des Hauptantriebs verfügen landwirtschaftliche Fahrzeuge zweckmäßigerweise über eine elektrische Energiespeichereinrichtung, insbesondere in Form einer Batterie (Akkumulator), zur Versorgung der elektrischen Verbraucher mit Energie. Bei mit Verbrennungsmotor ausgestatteten Fahrzeugen wird diese Batterie während des Betriebs des Verbrennungsmotors zumeist von einem mitlaufenden Generator ("Lichtmaschine") aufgeladen. Sobald der Verbrennungsmotor - zum Beispiel nach einem Ernteeinsatz oder während einer Einsatzunterbrechung - angehalten wird, erfolgt kein Laden der Batterie. Folglich entlädt sich die Batterie abhängig von der Anzahl eingeschalteter elektrischer Verbraucher. Unter anderem aufgrund von Kriechströmen durch das Bordnetz findet eine (zwar langsame) Entladung der Batterie sogar bei nicht eingeschalteten Verbrauchern statt.

Einsatzbedingte Verunreinigungen am Fahrzeug bzw. eindringende Feuchtigkeit können leicht zu Kabelbrand oder gar zu Fahrzeugbrand führen, wenn die Batterie an das Bordnetz angeschlossen ist.

Aus diesen Gründen ist es für landwirtschaftliche Fahrzeuge bekannt und in zahlreichen Ländern sogar gesetzlich vorgeschrieben, einen Batterieschalter (auch: "Batteriehauptschalter") vorzusehen, der zwischen einem Einschaltzustand und einem Ausschaltzustand schaltbar ist, um auf diese Weise die Batterie mit dem Bordnetz - und so mit den elektrischen Verbrauchern - elektrisch zu verbinden bzw. davon zu trennen.

Es gibt rein mechanisch betätigte Batterieschalter, die in der Nähe der Batterie angeordnet sind und beispielsweise vor Besteigen (bzw. nach Verlassen) des Fahrzeugs manuell vom Bediener betätigt werden. Ein Fahrzeugbediener schließt diesen Batteriehauptschalter folglich, bevor das Fahrzeug zum Einsatz in Gebrauch genommen wird und öffnet diesen, wenn das Fahrzeug nicht mehr genutzt wird. Wird das Öffnen vergessen, besteht die Gefahr einer Batterieentladung oder - bei Vorliegen ungünstiger Verunreinigungen und/oder Feuchtigkeit - von Kabel- bzw. Fahrzeugbrand. In diesem Zusammenhang sei auf die EP 2 548 430 A1 verwiesen, die unter anderem eine Zustandsanzeige für den Batterieschalter eines selbstfahrenden Feldhäckslers mittels einer Außenbeleuchtungseinrichtung vorschlägt.

Alternativ ist es insbesondere von Traktoren bekannt, dass der Batterieschalter bei Drehen des Zündschlüssels mitbetätigt wird. Dies erspart dem Fahrzeugbediener eine separate Betätigung. Bei Verlassen des Traktors wird die Batterie automatisch vom Bordnetz getrennt.

Beide Lösungen weisen den Nachteil auf, dass die elektrischen Verbraucher im Nichtgebrauchszustand des Fahrzeugs stromlos sind, da die Batterie vom Bordnetz des Fahrzeugs getrennt ist. In diesem Zustand, der im ersten Fall bei Verlassen des Fahrzeugs bewusst vom Bediener veranlasst wird, im zweiten Fall zwangsweise mit Ausschalten der Zündung eintritt, sind keine elektrischen und/oder elektronischen Funktionen des Fahrzeugs verfügbar bzw. ausführbar.

Weiterer Stand der Technik ist aus der JP2007-267 630 A bekannt.

Es ist eine Aufgabe der vorliegenden Erfindung, ein Fahrzeug der genannten Art anzugeben, dessen elektrische Verbraucher trotz örtlicher Abwesenheit des Bedieners bedarfsweise, insbesondere vorübergehend genutzt werden können.

Die Aufgabe wird gelöst durch ein Fahrzeug mit den Merkmalen des Anspruchs 1.

Die dem Fahrzeug zugeordnete bordeigene Kommunikationseinrichtung dient dabei als eine Schnittstelle, die von einer fahrzeugunabhängigen Kommunikationseinrichtung Signale empfangen kann und die weiterhin in der Lage ist, abhängig von den empfangenen Signalen eine Ansteuerung des Schalters vorzunehmen. Auf diese Weise wird erfindungsgemäß die Möglichkeit einer Fernbetätigung des Schalters geschaffen, so dass sich die Energiespeichereinrichtung auch bei örtlicher Abwesenheit eines Fahrzeugbedieners ganz nach Bedarf dem zumindest einen am Fahrzeug angeordneten Verbraucher, insbesondere dem gesamten Bordnetz zuschalten und davon trennen lässt. Da sich die bordeigene Kommunikationseinrichtung erfindungsgemäß zum Signalempfang, bevorzugt auch zum wechselseitigen Signalaustausch, mit einer fahrzeugunabhängigen, d.h. einer vom Ort des Fahrzeug unabhängigen Kommunikationseinrichtung eignet, lässt sich die Betätigung des Schalters von prinzipiell jedem Ort aus der Ferne durchführen. Der zumindest eine elektrische Verbraucher, bei dem es sich zunächst um jedwede elektrische und/oder elektronische Einrichtung handeln kann, kann somit vorteilhaft auch in Situationen betrieben werden, in denen dies bei herkömmlichen Fahrzeugen nicht möglich war. Abhängig von der Art des Verbrauchers können dadurch zusätzliche Funktionen bereitgestellt werden, die beispielsweise einen bislang erforderlichen Arbeitsaufwand für den Bediener einsparen, den Benutzungskomfort erhöhen und dergleichen.

In konstruktiver Hinsicht handelt es sich bei dem Schalter vorzugsweise um ein von der bordeigenen Kommunikationseinrichtung steuerbares Relais. Die bordeigene Kommunikationseinrichtung kontrolliert dabei einen Steuerstromkreis des Relais und ist dadurch in der Lage einen Laststromkreis des Relais, dem die elektrische Energiespeichereinrichtung und der zumindest eine elektrische Verbraucher angehören, zu schließen bzw. zu öffnen. Im geöffneten Zustand des Relais (Ausschaltzustand des Schalters) ist somit die Energieversorgung des Verbrauchers unterbrochen. Im geschlossenen Zustand des Relais (Einschaltzustand) versorgt somit die Energiespeichereinrichtung den Verbraucher mit elektrischer Energie. Alternativ zu einem Relais können auch andere Arten fernbetätigbarer Stromschalter zum Einsatz kommen, um eine vergleichbare Wirkung zu erzielen.

Mit dem erfindungsgemäß an dem Fahrzeug vorgesehenen Schalter lässt sich die gesamte Energieversorgung der Energiespeichereinrichtung unterbrechen und wiederherstellen. Demnach handelt es sich bei dem Schalter um einen Hauptschalter der Energiespeichereinrichtung, nämlich um einen sogenannten Batteriehauptschalter (oder auch: Batterietrennschalter). Auf diese Weise ist sichergestellt, dass bei geöffnetem Schalter (Ausschaltzustand) eine ungewollte Entladung der Energiespeichereinrichtung aufgrund von Kriechströmen durch das Bordnetz des Fahrzeugs verhindert wird. Zugleich besteht dann keine Gefahr von Kabelbränden oder davon ausgehenden weiteren Beschädigungen des Fahrzeugs.

Zur Erzielung der erfindungsgemäß angestrebten örtlich unabhängigen Betätigung des Schalters eignet sich die bordeigene Kommunikationseinrichtung, wie zweckmäßigerweise auch die fahrzeugunabhängige Kommunikationseinrichtung, bevorzugt zur drahtlosen Kommunikation. In technischer Hinsicht bietet sich hierfür insbesondere die Funktechnologie (beispielsweise Mobilfunk) an.

Grundsätzlich kann eine Betätigung des Schalters ausschließlich aufgrund Signalempfang von der fahrzeugunabhängigen Kommunikationseinrichtung erfolgen. In diesem Fall ist der Schalter ausschließlich mittels der fahrzeugunabhängigen Kommunikationseinrichtung, also von außen steuerbar. Eine vorteilhafte Weiterbildung sieht indes vor, dass der bordeigenen Kommunikationseinrichtung eine Steuerungs- und Rechnereinheit zugeordnet ist, die betreibbar ist, bei Vorliegen einer vorgebbaren Bedingung selbsttätig ein Steuersignal zur Betätigung des Schalters zu erzeugen. Eine solche Bedingung kann im einfachen Fall zeitlicher Art sein, demgemäß der Schalter der Energiespeichereinrichtung beispielsweise nach Ablauf einer bestimmten Zeitspanne (z.B. drei Stunden nach Verlassen des Fahrzeugs) oder zu einer bestimmten Uhrzeit bzw. einem bestimmten Datum betätigt wird. Damit könnte beispielsweise auf kostengünstige Weise ein Diebstahlschutz erreicht werden oder könnte eine ungewollte Entladung der Energiespeichereinrichtung über Nacht sicher verhindert werden. Zahlreiche andere vorgebbare Bedingungen sind denkbar. Insbesondere könnten der Rechnereinheit Sensoren zur Erfassung von Zuständen des Fahrzeugs und/oder dessen Umgebung zugeordnet sein. Abhängig von den erfassten Zuständen könnte die Rechnereinheit dann ein Steuersignal zur Betätigung des Schalters erzeugen.

Vorteilhaft ist weiterhin vorgesehen, dass die bordeigene Kommunikationseinrichtung über eine Datenleitung, bevorzugt einen Datenbus, mit dem zumindest einen Verbraucher in Signalverbindung steht und betreibbar ist, diesen in Abhängigkeit von empfangenen Signalen der fahrzeugunabhängigen Kommunikationseinrichtung anzusteuern. Damit dient die bordeigene Kommunikationseinrichtung nicht nur als Schnittstelle zur Betätigung des Schalters der elektrischen Energieversorgung des Fahrzeugs, sondern dient - im Einschaltzustand des Schalters, also bei aktivem Bordnetz - vorteilhaft auch als Kommunikationsschnittstelle zwischen der fahrzeugunabhängigen Kommunikationseinrichtung und einem oder mehreren der elektrischen Verbraucher.

Eine besondere Bedeutung bekommt die Möglichkeit der Fernbetätigung des Schalters, wenn das Fahrzeug mit Einrichtungen ausgestattet ist, deren Betrieb auch oder insbesondere bei Abwesenheit des Bedieners von Nutzen ist. Dies ist beispielsweise der Fall, wenn zumindest einer der Verbraucher betreibbar ist, eine den Betrieb des Fahrzeugs vorbereitende Maßnahme durchzuführen, wie beispielweise ein Vorheizen des Motors, des Motoröls, der Fahrerkabine. Auch könnte es sich bei dem Verbraucher um eine elektronische Einrichtung handeln, mittels welcher vor Betriebsbeginn Einstellungen am Fahrzeug vornehmbar sind, so dass beispielsweise das Fahrzeug in gewünschter Weise für einen Arbeitseinsatz vorkonfiguriert wird (Einstellung von Luftdruck, Hubwerk, Arbeitsaggregaten, Laden von Felddaten etc.) oder dass ein Datenbestand und/oder eine Software der elektronischen Einrichtung vor Einsatzbeginn aktualisiert wird.

Weiterhin könnte der Verbraucher betreibbar sein, allgemein eine bei Abwesenheit des Fahrzeugbedieners zu erfüllende Aufgabe und/oder eine Komfortfunktion des Fahrzeugs durchzuführen. So könnte es sich bei dem Verbraucher um eine Kamera oder einen sonstigen Sensor handeln, um beispielsweise die Umgebung und/oder den Zustand (beispielsweise den Füllstand des Treibstofftanks, des Öltanks, den nächsten Wartungstermin) des Fahrzeugs bei Abwesenheit des Bedieners aus der Ferne zu überwachen bzw. abzufragen. Alternativ oder ergänzend könnte es sich bei dem Verbraucher um eine Beleuchtungseinrichtung, ein Klimaaggregat, eine Unterhaltungseinrichtung (Radio, Fernseher, Video) oder dergleichen handeln, die aus einem denkbaren Anlass aus der Ferne betrieben und gesteuert werden soll. Erfindungsgemäß weist die bordeigene Kommunikationseinrichtung eine eigene Energieversorgung auf, die sich insbesondere bei Betrieb eines Hauptantriebsmotors des Fahrzeugs selbsttätig aufladen lässt. Auf diese Weise ist gewährleistet, dass die bordeigene Kommunikationseinrichtung auch im Ausschaltzustand des Schalters mit Energie versorgt wird, um überhaupt Signale von der fahrzeugunabhängigen Kommunikationseinrichtung empfangen zu können und um Steuersignale zu Betätigung des Schalters erzeugen zu können.

Die Erfindung betrifft weiterhin eine Kombination aus einem wie zuvor beschriebenen Fahrzeug und einer fahrzeugunabhängigen Kommunikationseinrichtung zur Fernbetätigung des Schalters des Fahrzeugs.

Vorteilhaft weist die fahrzeugunabhängige Kommunikationseinrichtung eine elektronische Datenverarbeitungseinrichtung auf oder ist dieser zugeordnet, wobei diese betreibbar ist, den zumindest einen Verbraucher des Fahrzeugs zur Erfüllung von Funktionen anzusteuern und/oder mit diesem wechselseitig zu kommunizieren. Die fahrzeugunabhängige Kommunikationseinrichtung lässt sich in diesem Fall nicht bloß zum Aktivieren der Energieversorgung des Fahrzeugs durch Fernbetätigung des Schalters nutzen, sondern erlaubt unter Nutzung der bordeigenen Kommunikationseinrichtung eine Ansteuerung des zumindest einen Verbrauchers. Vorzugsweise ist dabei die Möglichkeit einer wechselseitigen Kommunikation vorgesehen.

Gemäß einer für den Bediener besonders komfortablen Ausgestaltung der Erfindung ist auf der fahrzeugunabhängigen Kommunikationseinrichtung ein Anwendungsprogramm ausführbar, das dem Bediener der fahrzeugunabhängigen Kommunikationseinrichtung Zugriff auf den zumindest einen Verbraucher ermöglicht. Das Anwendungsprogramm kann beispielsweise eine für den Bediener angepasste Bedienoberfläche bereitstellen, so dass Funktionen und Zustände des Fahrzeugs, insbesondere des Schalters und einzelner elektrischer Verbraucher sowie damit zusammenwirkender Einrichtungen, für den Bediener leicht erfassbar sind.

Vorteilhaft handelt es sich bei der fahrzeugunabhängigen Kommunikationseinrichtung um eine mobile Einrichtung, insbesondere ein Mobiltelefon, ein Smartphone, einen Tablett-PC, einen Laptop, eine Fernbedienung oder dergleichen. Ein geeignetes Anwendungsprogramm könnte beispielsweise in Form einer sogenannten "App" auf die mobile Einrichtung überspielbar angeboten werden.

Die Erfindung wird nachfolgend anhand eines Ausführungsbeispiels näher erläutert. In der Zeichnung zeigt die einzige
- Fig.: einen Traktor in schematischer Ansicht von der Seite.

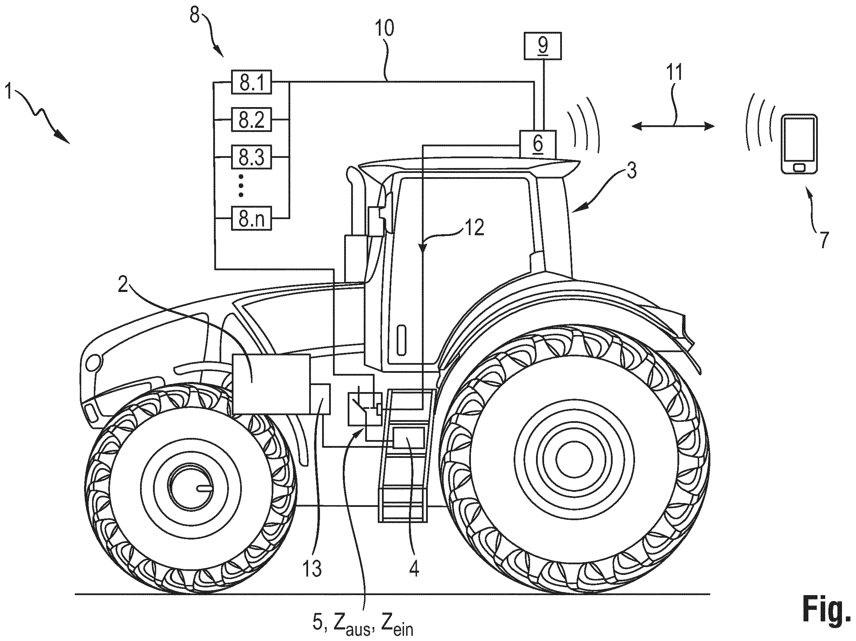

Die einzige Fig.1 zeigt ein landwirtschaftliches Fahrzeug in Form eines Traktors 1 in einer schematischen Ansicht von der Seite. Der Traktor 1 weist einen frontseitig angeordneten Verbrennungsmotor 2 auf, der im eingeschalteten Zustand als Hauptantriebsaggregat Antriebsleistung für den Fahrantrieb sowie für verschiedene Nebenaggregate (hydraulisch, pneumatisch, elektrisch) des Traktors 1 bereitstellt. Unter anderem treibt der Verbrennungsmotor 2 im Betrieb einen elektrischen Generator 13 (auch: "Lichtmaschine") an, der wiederum dazu dient, eine Batterie 4 aufzuladen. Weiterhin weist der Traktor 1 eine Fahrerkabine 3 auf, in der ein Fahrzeugbediener während eines Arbeits- bzw. Ernteeinsatzes Platz nehmen kann.

Der Traktor 1 ist in für sich gesehen üblicher Weise mit einer Vielzahl von n elektrischen Verbrauchern 8 ausgestattet, die in der Fig. vereinfacht schematisch als Kästchen mit den Bezeichnungen 8.1; 8.2; 8.3 bis 8.n bezeichnet sind. Beispielsweise handelt es sich bei dem Verbraucher 8.1 um eine zentrale elektronische Steuerung des Traktors 1. Diese zentrale elektronische Steuerung 8.1 greift auf sämtliche für den Betrieb des Traktors 1 wesentlichen elektrischen und elektronischen Funktionseinrichtungen zu, wie beispielsweise für die Motorfunktionen, die Hydraulikfunktionen, die in der Fahrerkabine 3 angeordneten Bedieninstrumente usw.. Bei dem Verbraucher 8.2 handelt es sich beispielsweise um einen Anlasser, der zum Starten des Antriebsmotors 2 dient. Bei dem Verbraucher 8.3 handelt es sich beispielsweise um eine Kabinenheizung. Zahlreiche weitere Verbraucher sind denkbar.

Die Vielzahl der Verbraucher 8 wird gemeinsam von der Batterie 4 mit elektrischer Spannung versorgt. Dazu sind die Verbraucher 8 mit der Batterie 4 über einen Schalter 8 gemeinsam verbindbar, der zwischen einem Einschaltzustand Zₑᵢₙ, in dem die Batterie 4 die Verbraucher 8 mit Energie versorgt, und einem Ausschaltzustand Zₐᵤₛ schaltbar ist, in dem die Energieversorgung der Verbraucher 8 unterbrochen ist.

Durch diese Schaltbarkeit lässt sich verhindern, dass sich die Batterie 4 bei stehendem Antriebsmotor 2 - und somit bei nicht angetriebenem Generator 13 - unter anderem aufgrund von Kriechströmen durch das Bordnetz langsam entlädt. Zudem wird das Risiko von Kabelbrand aufgrund von einsatzbedingten Verunreinigungen bzw. aufgrund eindringender Feuchtigkeit am Traktor 1 sowie damit verbundenen weiteren Gefahren deutlich reduziert.

Bei dem Schalter 5 handelt es sich um einen fernbetätigbaren Schalter in Form eines Relais. Mit Hilfe dieses Relais lässt sich ein Laststromkreis, dem die Batterie 4 sowie die Verbraucher 8 angehören, öffnen (Ausschaltzustand) und schließen (Einschaltzustand). Zur Betätigung des Relais ist der Schalter 5 im Steuerstromkreis mit einer bordeigenen Kommunikationseinrichtung 6 verbunden. Es handelt sich hierbei um eine elektronische Einrichtung, insbesondere ausgestattet mit einem Funkempfänger und Funksender, die betreibbar ist, von einer fahrzeugunabhängigen Kommunikationseinrichtung 7 Signale 11 zu empfangen und in Abhängigkeit der empfangenen Signale 11 ein Steuersignal 12 zur Betätigung des Schalters 5 zu erzeugen. Auf diese Weise lässt sich der Schalter 5 mittels der Kommunikationseinrichtung 6 öffnen oder schließen.

Die bordeigene Kommunikationseinrichtung 6 ist mit einem Funkempfänger und einem Funksender ausgestattet und eignet sich damit zur drahtlosen Kommunikation. Weiterhin steht die bordeigene Kommunikationseinrichtung 6 über einen Datenbus 10 mit der Vielzahl von Verbrauchern 8 in Signalverbindung. Die bordeigene Kommunikationseinrichtung 6 ist auf diese Weise betreibbar, auf die Vielzahl der Verbraucher 8 zuzugreifen, insbesondere diese anzusteuern und/oder Informationen von diesen abzufragen.

In der Fig. ist weiterhin eine fahrzeugunabhängige Kommunikationseinrichtung 7 gezeigt. Im gezeigten Ausführungsbeispiel handelt es sich hierbei um mobile Einrichtung in Form eines Smartphones. Auf vergleichbare Weise könnte es sich um ein Mobiltelefon, einen Tablett-PC, Laptop, eine Fernbedienung ohne weitere Funktionen oder dergleichen handeln. Die fahrzeugunabhängige Kommunikationseinrichtung 7 ist jedenfalls örtlich von der Position des Traktors 1 unabhängig und eignet sich (wie auch die bordeigene Kommunikationseinrichtung 6) zur drahtlosen Kommunikation, hier über Mobilfunk, mit der bordeigenen Kommunikationseinrichtung 6. Für eine Kommunikation zwischen den Einrichtungen 6 und 7 können weitere technisch notwendige, jedoch für sich bekannte Einrichtungen eines Mobilfunknetzes (Sende-/Empfangsmasten, Verstärker etc.) zum Einsatz kommen, die im Zusammenhang der vorliegenden Erfindung von untergeordneter Bedeutung und daher hier nicht näher zu erläutern sind.

Die Funktionsweise des Traktors 1 bzw. der Kombination aus Traktor 1 und der fahrzeugunabhängigen Kommunikationseinrichtung 7 gestaltet sich folgendermaßen: Auf der fahrzeugunabhängigen Kommunikationseinrichtung 7, hier dem Smartphone, ist ein Anwendungsprogramm (beispielsweise in Form einer aus dem Internet ladbaren sogenannten "App") ausführbar, das einem Bediener des Smartphones 7 Zugriff auf den Traktor 1 ermöglicht. So ist innerhalb des Anwendungsprogramms die Möglichkeit vorgesehen, dass sich der Bediener aus der Ferne den Status des Batterieschalters 5 des Traktors 1 zunächst anzeigen lässt und darüber hinaus auch den Schalter 5 aus der Ferne betätigen kann. Zahlreiche weitere Funktionen sind denkbar.

Für eine Betätigung des Schalters 5 tätigt der Bediener eine im Anwendungsprogramm des Smartphones 7 vorgesehene Bedienereingabe. Aufgrund dieser Bedienereingabe, beispielsweise einer virtuellen Schalterbetätigung, sendet das Smartphone 7 ein entsprechendes Signal 11, das von der bordeigenen Kommunikationseinrichtung 6 des Traktors 1 empfangen wird. Der bordeigenen Kommunikationseinrichtung 6 kann dazu eine eigene Energieversorgung zugeordnet sein, so dass auch bei ausgeschaltetem Schalter 5 eine Stromversorgung zumindest der bordeigenen Kommunikationseinrichtung 6 gewährleistet ist. Die Kommunikationseinrichtung 6 erzeugt bei Erhalt eines derartigen Signals 11 ein internes Steuersignal 12, das über den Steuerstromkreis des Schalters 5 zu einer Betätigung des Schalters 5 und damit zum Schließen (Einschaltzustand Zₑᵢₙ) - oder Öffnen (Ausschaltzustand Zₐᵤₛ) - des Laststromkreises führt. Die Batterie 4 wird auf diese Weise insgesamt dem Bordstromnetz mit der Vielzahl von elektrischen Verbrauchern 8 zugeschaltet oder von diesem genommen. Damit besteht auf komfortable Weise die Möglichkeit einer Fernbedienung des Schalters 5, der als Batteriehauptschalter dient. Der Traktor 1 lässt sich auf diese Weise von fern aus einem Ruhezustand in einen Wachzustand (und umgekehrt) überführen.

Der bordeigenen Kommunikationseinrichtung 6 ist weiterhin eine Rechnereinheit 9 zugeordnet. Diese ist betreibbar, bei Vorliegen einer vorgebbaren Bedingung selbsttätig ein Steuersignal 12 zur Betätigung des Schalters 5 zu erzeugen. Auf diese Weise kann auch unabhängig von einem Signal des Smartphones 7 (oder sonstigen mobilen Einrichtung) eine Betätigung des Schalters 5 selbsttätig beispielsweise unter Berücksichtigung von zeitlichen Vorgaben oder bei Vorliegen von sonstigen Bedingungen erfolgen. Eine zeitliche Vorgabe könnte beispielsweise darin bestehen, dass der Schalter 5 während bestimmter Uhrzeiten geöffnet bleibt, wodurch auf einfache Weise ein Diebstahlschutz verwirklicht wäre.

Die bordeigene Kommunikationseinrichtung 6 steht weiterhin über einen Datenbus 10 mit zumindest einem der Verbraucher 8, möglicherweise auch mit mehreren oder sämtlichen der Verbraucher 8, in Signalverbindung und ist betreibbar, diesen (bzw. diese) in Abhängigkeit von empfangenen Signalen 11 der fahrzeugunabhängigen Kommunikationseinrichtung 7 anzusteuern. Auf diese Weise lässt sich die bordeigene Kommunikationseinrichtung 6 zusätzlich dazu nutzen, von einem der Verbraucher 8 gewünschte Funktionen durchführen zu lassen. Beispielsweise könnte in Abwesenheit des Fahrzeugbedieners eine den Betrieb des Fahrzeugs vorbereitende Maßnahme (Softwareaktualisierung, Vornehmen von Betriebseinstellungen am Fahrzeug durch Vorkonfiguration, Vorheizen des Motors, des Motoröls, der Fahrerkabine etc.) und/oder allgemein eine bei Abwesenheit eines Fahrzeugbedieners zu erfüllende Aufgabe (Umgebungsüberwachung, Zustandsüberwachung des Fahrzeugs) durchgeführt werden.

Die Erfindung ist anhand der Fig. anhand des Beispiels eines Traktors 1 erläutert worden. Es sei angemerkt, dass mit der Erfindung vergleichbare Wirkungen und Vorteile auch für andere landwirtschaftliche Fahrzeuge, insbesondere für selbstfahrende Erntemaschinen wie Mähdrescher und Feldhäcksler erzielen lassen.

### Bezugszeichenliste

- 1: Traktor
- 2: Antriebsmotor
- 3: Fahrerkabine
- 4: Batterie
- 5: Batterieschalter
- 6: Fernzugriffseinrichtung
- 7: Smartphone
- 8: elektrische Verbraucher
- 8.1: zentrale elektronische Steuerung
- 8.2: Anlasser
- 8.3: Kabinenheizung
- 9: Rechnereinheit
- 10: Datenbus
- 11: Funksignal
- 12: Steuersignal
- 13: Lichtmaschine

- Zₑᵢₙ: Schaltzustand (ein)
- Zₐᵤₛ: Schaltzustand (aus)

## Patentansprüche

1. Landwirtschaftliches Fahrzeug (1) mit zumindest einem elektrischen Verbraucher (8), einer elektrischen Energiespeichereinrichtung (4) und einem Schalter (5), der zwischen einem Einschaltzustand (Zₑᵢₙ), in dem die Energiespeichereinrichtung (4) den Verbraucher (8) mit Energie versorgt, und einem Ausschaltzustand (Zₐᵤₛ) schaltbar ist, in dem die Energieversorgung des Verbrauchers (8) unterbrochen ist,
**gekennzeichnet durch** eine bordeigene Kommunikationseinrichtung (6), die betreibbar ist, von einer fahrzeugunabhängigen Kommunikationseinrichtung (7) Signale (11) zu empfangen und in Abhängigkeit der empfangenen Signale (11) ein Steuersignal (12) zur Betätigung des Schalters (5) zu erzeugen, wobei es sich bei dem Schalter (5) um einen Hauptschalter der Energiespeichereinrichtung (4), nämlich um einen Batterietrennschalter, handelt, wobei die bordeigene Kommunikationseinrichtung (6) eine eigene Energieversorgung aufweist,

2. Fahrzeug nach Anspruch 1, **dadurch gekennzeichnet, dass** es sich bei dem Schalter (5) um ein von der bordeigenen Kommunikationseinrichtung (6) steuerbares Relais handelt.

3. Fahrzeug nach Anspruch 1 oder 2, **dadurch gekennzeichnet, dass** sich die bordeigene Kommunikationseinrichtung (6), wie zweckmäßigerweise auch die fahrzeugunabhängige Kommunikationseinrichtung (7), zur drahtlosen Kommunikation eignet.

4. Fahrzeug nach einem der vorigen Ansprüche, **dadurch gekennzeichnet, dass** der bordeigenen Kommunikationseinrichtung (6) eine Rechnereinheit (9) zugeordnet ist, die betreibbar ist, bei Vorliegen einer vorgebbaren Bedingung selbsttätig ein Steuersignal (12) zur Betätigung des Schalters (5) zu erzeugen.

5. Fahrzeug nach einem der vorigen Ansprüche, **dadurch gekennzeichnet, dass** die bordeigene Kommunikationseinrichtung (6) über eine Datenleitung (10), bevorzugt einen Datenbus, mit dem zumindest einen Verbraucher (8) in Signalverbindung steht und betreibbar ist, diesen in Abhängigkeit von empfangenen Signalen (11) der fahrzeugunabhängigen Kommunikationseinrichtung (7) anzusteuern.

6. Fahrzeug nach einem der vorigen Ansprüche, **dadurch gekennzeichnet, dass** der Verbraucher (8) betreibbar ist, eine den Betrieb des Fahrzeugs (1) vorbereitende Maßnahme durchzuführen.

7. Fahrzeug nach einem der vorigen Ansprüche, **dadurch gekennzeichnet, dass** der Verbraucher (8) betreibbar ist, eine bei Abwesenheit eines Fahrzeugbedieners zu erfüllende Aufgabe durchzuführen.

8. Fahrzeug nach einem der vorigen Ansprüche, **dadurch gekennzeichnet, dass** der Verbraucher (8) eine Komfortfunktion des Fahrzeugs (1) bereitstellt.

9. Fahrzeug nach einem der vorigen Ansprüche, **dadurch gekennzeichnet, dass** die bordeigene Kommunikationseinrichtung (6) eine eigene Energieversorgung aufweist, die sich bei Betrieb eines Hauptantriebsmotors (2) des Fahrzeugs (1) selbsttätig aufladen lässt.

10. Kombination aus einem Fahrzeug (1) nach einem der vorigen Ansprüche und einer fahrzeugunabhängigen Kommunikationseinrichtung (7) zur Fernbetätigung des Schalters (5) des Fahrzeugs (1).

11. Kombination nach Anspruch 10, **dadurch gekennzeichnet, dass** die fahrzeugunabhängige Kommunikationseinrichtung (7) eine elektronische Datenverarbeitungseinrichtung aufweist oder dieser zugeordnet ist, die betreibbar ist, den zumindest einen Verbraucher (8) des Fahrzeugs (1) zur Erfüllung von Funktionen anzusteuern und/oder mit diesem wechselseitig zu kommunizieren.

12. Kombination nach Anspruch 10 oder 11, **dadurch gekennzeichnet, dass** auf der fahrzeugunabhängigen Kommunikationseinrichtung (7) ein Anwendungsprogramm ausführbar ist, das einem Bediener der fahrzeugunabhängigen Kommunikationseinrichtung (7) Zugriff auf den zumindest einen Verbraucher (8) ermöglicht.

13. Kombination nach einem der Ansprüche 10 bis 12 **dadurch gekennzeichnet, dass** es sich bei der fahrzeugunabhängigen Kommunikationseinrichtung (7) um eine mobile Einrichtung, insbesondere ein Mobiltelefon, ein Smartphone, einen Tablett-PC, einen Laptop, eine Fernbedienung oder dergleichen handelt.

## Claims

1. An agricultural vehicle (1) having at least one electrical consumer (8), an electrical power storage device (4) and a switch (5) switchable between a switched-on condition (Zₑᵢₙ) in which the power storage device (4) supplies the consumer (8) with power and a switched-off condition (Zₐᵤₛ) in which the power supply to the consumer (8) is interrupted,
**characterised by** an on-board communication device (6) operable to receive signals (11) from a vehicle-independent communication device (7) and in dependence on the received signals (11) to produce a control signal (12) for actuation of the switch (5), wherein the switch (5) is a main switch of the power storage device (4), more specifically a battery disconnection switch, wherein the on-board communication device (6) has its own power supply.

2. A vehicle according to claim 1 **characterised in that** the switch (5) is a relay controllable by the on-board communication device (6).

3. A vehicle according to claim 1 or claim 2 **characterised in that** the on-board communication device (6) like desirably also the vehicle-independent communication device (7) is suitable for wireless communication.

4. A vehicle according to one of the preceding claims **characterised in that** associated with the on-board communication device (6) is a computer unit (9) operable when a predeterminable condition obtains to automatically produce a control signal (12) for actuation of the switch (5).

5. A vehicle according to one of the preceding claims **characterised in that** the on-board communication device (6) is in signal communication with the at least one consumer (8) by way of a data line (10), preferably a data bus, and is operable to actuate said consumer in dependence on received signals (11) of the vehicle-independent communication device (7).

6. A vehicle according to one of the preceding claims **characterised in that** the consumer (8) is operable to implement a measure for preparing operation of the vehicle (1).

7. A vehicle according to one of the preceding claims **characterised in that** the consumer (8) is operable to implement a task to be performed in the absence of a vehicle operator.

8. A vehicle according to one of the preceding claims **characterised in that** the consumer (8) provides a comfort function of the vehicle (1).

9. A vehicle according to one of the preceding claims **characterised in that** the on-board communication device (6) has its own power supply which can be automatically charged up in operation of a main drive engine (2) of the vehicle (1).

10. A combination comprising a vehicle (1) according to one of the preceding claims and a vehicle-independent communication device (7) for remote actuation of the switch (5) of the vehicle (1).

11. A combination according to claim 10 **characterised in that** the vehicle-independent communication device (7) has or is associated with an electronic data processing device operable to actuate the at least one consumer (8) of the vehicle (1) to perform functions and/or to reciprocally communicate therewith.

12. A combination according to claim 10 or claim 11 **characterised in that** an application program can be executed on the vehicle-independent communication device (7), which program allows an operator of the vehicle-independent communication device (7) access to the at least one consumer (8).

13. A combination according to one of claims 10 to 12 **characterised in that** the vehicle-independent communication device (7) is a mobile device, in particular a mobile telephone, a smartphone, a tablet PC, a laptop, a remote control or the like.

## Revendications

1. Véhicule agricole (1) comprenant au moins un organe utilisateur électrique (8), un dispositif d'accumulation d'énergie électrique (4) et un interrupteur (5) qui est commutable entre un état sous tension (Zₑᵢₙ), dans lequel le dispositif d'accumulation d'énergie (4) alimente l'organe utilisateur (8) en énergie, et un état hors tension (Zₐᵤₛ), dans lequel l'alimentation en énergie de l'organe utilisateur (8) est interrompue, **caractérisé par** un dispositif de communication embarqué (6) qui est exploitable pour recevoir des signaux (11) d'un dispositif de communication (7) indépendant du véhicule et, en fonction des signaux reçus (11), pour générer un signal de commande (12) afin d'actionner l'interrupteur (5), l'interrupteur (5) étant constitué par un interrupteur principal du dispositif d'accumulation d'énergie (4), c'est-à-dire par un coupe-batterie, le dispositif de communication embarqué (6) comportant sa propre alimentation en énergie.

2. Véhicule selon la revendication 1, **caractérisé en ce que** l'interrupteur (5) est constitué par un relais commandable par le dispositif de communication embarqué (6).

3. Véhicule selon la revendication 1 ou 2, **caractérisé en ce que** le dispositif de communication embarqué (6), de même que, de manière appropriée, le dispositif de communication (7) indépendant du véhicule, convient à la communication sans fil.

4. Véhicule selon une des revendications précédentes, **caractérisé en ce qu'**au dispositif de communication embarqué (6) est associée une unité de calcul (9) qui est exploitable pour générer automatiquement, en présence d'une condition prescriptible, un signal de commande (12) afin d'actionner l'interrupteur (5).

5. Véhicule selon une des revendications précédentes, **caractérisé en ce que** le dispositif de communication embarqué (6) est en liaison signalétique avec le au moins un organe utilisateur (8) par l'intermédiaire d'une ligne de données (10), de préférence d'un bus de données, et est exploitable pour commander celui-ci en fonction de signaux reçus (11) du dispositif de communication (7) indépendant du véhicule.

6. Véhicule selon une des revendications précédentes, **caractérisé en ce que** l'organe utilisateur (8) est exploitable pour mettre en oeuvre une mesure préparatoire à la marche du véhicule (1).

7. Véhicule selon une des revendications précédentes, **caractérisé en ce que** l'organe utilisateur (8) est exploitable pour exécuter une tâche à accomplir en l'absence d'un utilisateur du véhicule.

8. Véhicule selon une des revendications précédentes, **caractérisé en ce que** l'organe utilisateur (8) remplit une fonction de confort du véhicule (1).

9. Véhicule selon une des revendications précédentes, **caractérisé en ce que** le dispositif de communication embarqué (6) comporte sa propre alimentation en énergie qui, en cas de fonctionnement d'un moteur d'entraînement principal (2) du véhicule (1), se recharge automatiquement.

10. Combinaison d'un véhicule (1) selon une des revendications précédentes et d'un dispositif de communication (7) indépendant du véhicule pour télécommander l'interrupteur (5) du véhicule (1).

11. Combinaison selon la revendication 10, **caractérisée en ce que** le dispositif de communication (7) indépendant du véhicule comporte ou est associé à un dispositif électronique de traitement de données qui est exploitable pour commander le au moins un organe utilisateur (8) du véhicule (1) afin de remplir des fonctions et/ou de communiquer de façon réciproque avec lui.

12. Combinaison selon la revendication 10 ou 11, **caractérisée en ce que** sur le dispositif de communication (7) indépendant du véhicule est exécutable un programme d'application qui permet à un utilisateur du dispositif de communication (7) indépendant du véhicule d'accéder à l'au moins un organe utilisateur (8).

13. Combinaison selon une des revendications 10 à 12, **caractérisée en ce que** le dispositif de communication (7) indépendant du véhicule (7) est un dispositif mobile, en particulier un téléphone mobile, un smartphone, une tablette électronique, un ordinateur portable, une télécommande ou analogue.
